# EUROPÄISCHE PATENTSCHRIFT

(11) **EP 0 866 257 B1**
(45) Veröffentlichungstag und Bekanntmachung des Hinweises auf die Patenterteilung: **23.05.2001**
(21) Anmeldenummer: 97123036.2
(22) Anmeldetag: 31.12.1997
(51) Int. Cl.: F16L 47/00

(54) **Kunststoff-Rohrteil, insbesondere Bogen- und Abzweig-Formstück für Rohrsysteme in Abwasser-Hausinstallationen**
Plastic pipe-fitting, especially elbow and branch shaped elements, for pipe systems in household waste-water installations
Raccord de tuyauterie en plastique, surtout un élément en forme de coude ou branchement, pour systèmes de canalisations d'evacuation des eaux usées des habitations

(30) Priorität: 19.03.1997 DE 19711586
(43) Veröffentlichungstag der Anmeldung: 23.09.1998
(73) Patentinhaber: GEBERIT TECHNIK AG, 8645 Jona (CH)
(72) Erfinder: Röst, Maarten, 8645 Jona (CH)
(74) Vertreter: Zipse + Habersack

(56) Entgegenhaltungen:
- DE-C- 668 606
- US-A- 3 791 679
- US-A- 4 690 174
- US-A- 5 551 733

## Beschreibung

Die Erfindung betrifft ein Kunststoff-Rohrteil und insbesondere ein Bogen- und ein Abzweig-Formstück für Rohrsysteme in Abwasser-Hausinstallationen.

In Rohrsystemen für Abwasser-Hausinstallationen werden große Anstrengungen zur Erreichung einer optimalen Schalldämmung unternommen. Die Schalldämmung ist im allgemeinen umso besser, je größer die Masse der verwendeten Rohrteile ist. Kunststoff-Rohrteile, wie z.B. PE-Rohre, haben gewöhnlich eine geringe Masse und damit schlechte Schalldämm-Eigenschaften, weswegen besondere Maßnahmen zur Schalldämmung erforderlich sind. Aus EP-A-0 357 551 ist es bekannt, auf ein Kunststoff-Rohrteil zur Verbesserung der Schalldämm-Eigenschaften eine schalldämmende Schicht aus einem Kunststoff mit einem anorganischen Füllstoff aufzubringen. EP-B2-0 254 375 lehrt dagegen, dem Kunststoff-Rohrteil dadurch ein höheres Flächengewicht zu geben, indem dem thermoplastischen Rohrmaterial ein Bariumsulfat-Füller zugemischt wird. US-A-3791679 beschreibt verschiedene Kunststoffrohrteile mit Aussenverrippung.

Besonders kritisch als Geräuschquelle sind jedoch in Rohrleitungssystemen von Abwasser-Hausinstallationen die Bogen- und Abzweig-Formstücke, weil dort die Abwässer unmittelbar auf die Rohrinnenwände aufprallen, mit entsprechender Körperschallentwicklung. Der Erfindung liegt deshalb die Aufgabe zugrunde, Rohrformstücke wie Bogen- und Abzweig-Formstücke, wo Abwässer umgelenkt werden und damit auf die Rohrinnenwand prallen, bezüglich Schalldämmung zu verbessern. Dabei ist darauf zu achten, daß solche Formstücke mit verbesserter Schalldämmung leicht und kostengünstig insbesondere im Spritzgußverfahren herstellbar sind.

Die gestellte Aufgabe wird mit einem Kunststoff-Rohrteil gelöst, wie es durch den Anspruch 1 gekennzeichnet ist. Weiterbildungen der Erfindung sind in den Unteransprüchen beschrieben.

Das Kunststoff-Rohrteil nach der Erfindung zeichnet sich dadurch aus, daß, im wesentlichen begrenzt auf den Aufprallbereich durchgeleiteter Abwässer, es mit einer partiellen Außenverrippung versehen ist. Das heißt im Falle eines Bogen-Formstücks, daß diese partielle Außenverrippung auf der Bogenaußenseite ausgebildet ist und im Falle eines Abzweig-Formstücks die partielle Außenverrippung auf der dem Abzweigstutzen gegenüberliegenden Rohraußenseite liegt.

Diese Außenverrippung bringt im Aufprallbereich der Abwässer eine Massenerhöhung und damit eine Schalldämpfung des Aufprallgeräusches. Diese Massenerhöhung im Aufprallbereich ist spritzguß-technisch gut verarbeitbar, da sie nicht mit einer Erhöhung der Wandstärken verbunden ist. Die partielle Außenverrippung des Kunststoff-Rohrteils bringt aber nicht allein eine verbesserte Schalldämmung, sondern sie versteift auch das Kunststoff-Rohrteil im Aufprallbereich, so daß es insgesamt mit geringerer Wandstärke ausgebildet sein kann. Insbesondere bei einem Bogenformstück wird durch die partielle Außenverrippung die Gefahr des Einfallens im Bogenbereich vermieden. Durch die Versteifung kann auch ein weichereres Grundmaterial verwendet werden.

Grundsätzlich könnte die Außenverrippung auch in Richtung Rohrachse verlaufen, bevorzugt wird jedoch eine Außenverrippung in Form radial um das Rohrteil angeordneter Verstärkungsrippen. Beim Bogen-Formstück gehen damit die Verstärkungsrippen fächerförmig vom Radiusansatz aus. Beim Abzweig-Formstück liegen dagegen die Verstärkungsrippen parallel zueinander. Vorteilhaft steigt die Höhe der Außenverrippung, gesehen in Richtung Rohrachse, zum Mittelbereich an bzw. fällt sie von diesem ab. Die Verstärkungsrippen sitzen bogenförmig auf dem Rohrumfang, d.h. sie steigen bogenförmig aus der Rohraußenseite auf und seitlich laufen sie im wesentlichen tangential in die Rohraußenseite ein.

Zweckmäßig sind die Verstärkungsrippen im Querschnitt trapezförmig mit mindestens 4° Flankenwinkel. Ihre Höhe ist etwa gleich der Rohrwandstärke und ihre Breite beträgt maximal 80% der Rohrwandstärke.

Als Grundmaterial mit guten schalldämmenden Eigenschaften kommt, wie aus dem oben geschilderten Stand der Technik bekannt, zweckmäßig PE mit einem Bariumsulfat-Füller in Betracht.

Die Erfindung betrifft auch ein Rohrleitungssystem in Abwasser-Hausinstallationen unter Verwendung erfindungsgemäßer Bogen-und/oder Abzweig-Formstücken.

Die Erfindung wird in Beispielen nachfolgend anhand beigefügter Zeichnungen näher erläutert. Es zeigen:
- Fig. 1: ein Bogen-Formstück mit partieller Außenverrippung;
a) in Seitenansicht
b) in Vorderansicht und
c) in perspektivischer Ansicht;
- Fig. 2: ein Abzweig-Formstück mit einem 45° Abzweigstutzen und mit partieller Außenverrippung;
a) in Seitenansicht
b) in Vorderansicht (nur zur Hälfte) und
c) in Draufsicht;
- Fig. 3: ein Abzweig-Formstück mit einem 90° Abzweigstutzen und mit partieller Außenverrippung;
a) in Seitenansicht
b) in Vorderansicht und
c) in Draufsicht.

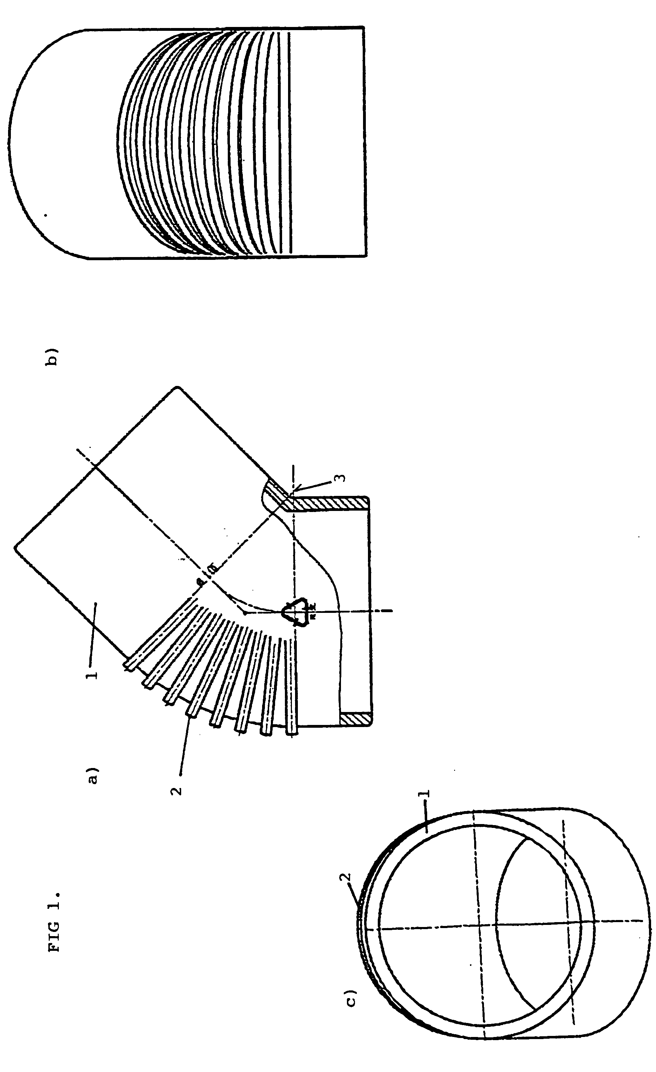

Das in Fig. 1 gezeigte Bogen-Formstück 1 mit einer 45° Abwinklung besitzt im Bogenbereich auf der Bogenaußenseite eine partielle Außenverrippung 2, die fächerförmig vom Radiusansatz 3 ausgeht. Die Außenverrippung 2 ist auf den Bogenbereich begrenzt. Die einzelnen Verstärkungsrippen dieser partiellen Außenverrippung 2 steigen bogenförmig aus der Rohraußenseite auf und seitlich laufen sie im wesentlichen tangential in die Rohraußenseite ein, wie insbesondere aus Fig. 1c ersichtlich. Auch in Richtung Rohrachse gesehen steigt die Höhe der Außenverrippung 2 zum Mittelbereich an bzw. fällt sie von diesem ab, wie Fig. 1a zeigt. Die Verstärkungsrippen sind rechteckig im Querschnitt und sie haben eine Breite etwa gleich der Rohrwandstärke und ihre Höhe im Mittelbereich beträgt maximal 80% der Rohrwandstärke.

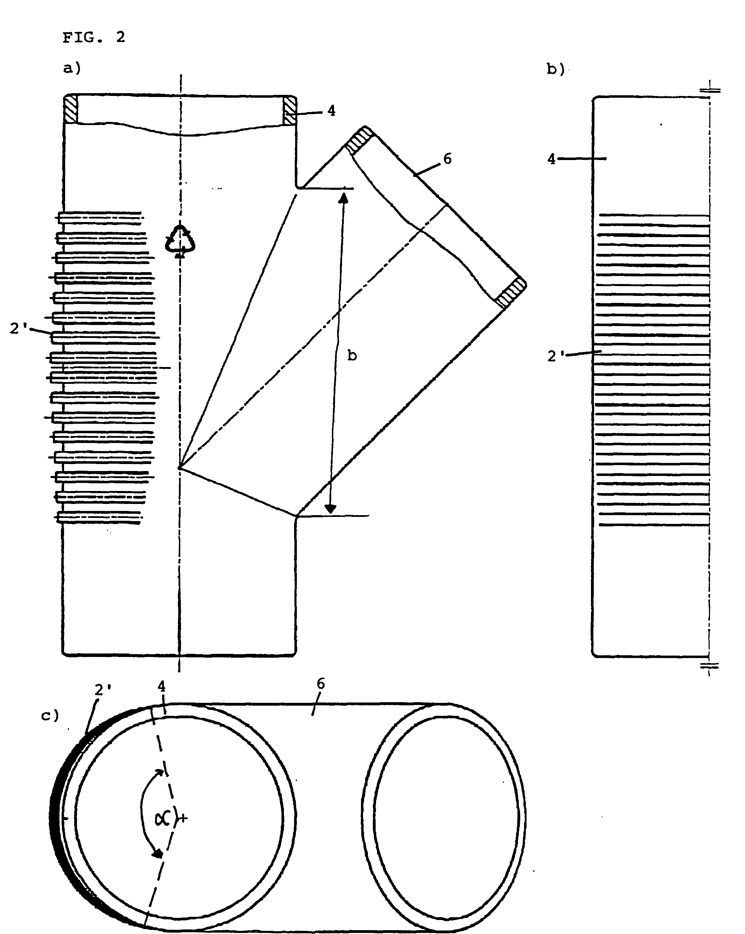

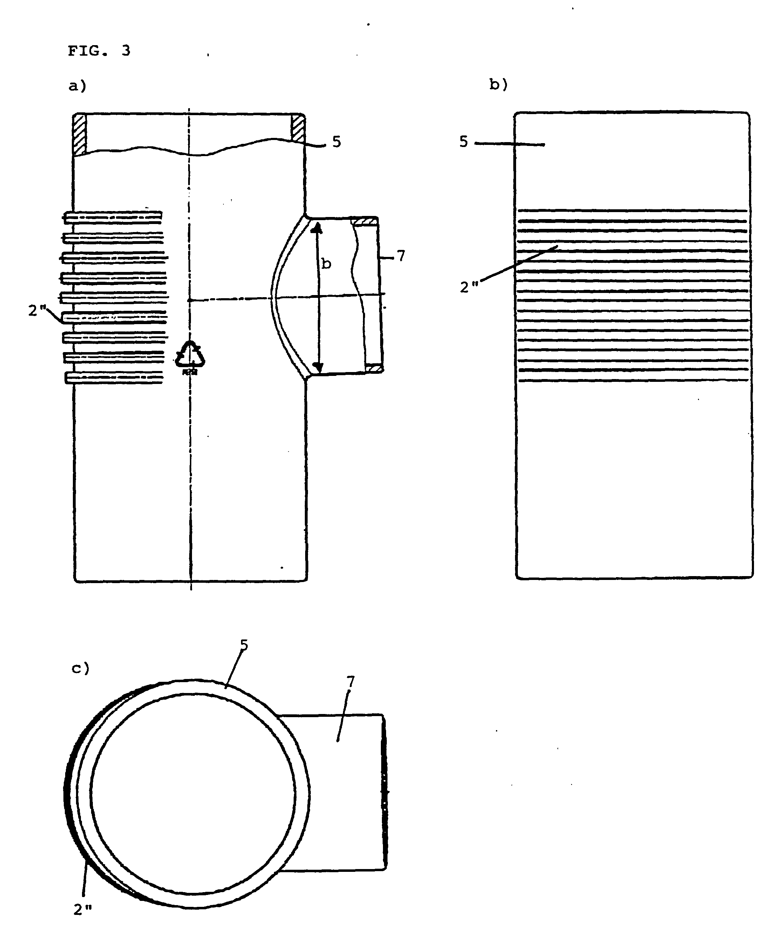

Eine prinzipiell gleiche partielle Außenverrippung 2' und 2" tragen die Abzweig-Formstücke 4 und 5 nach Fig. 2 und 3. Die Außenverrippung liegt jeweils auf der dem Abzweigstutzen 6 bzw. 7 gegenüberliegenden Rohraußenseite und sie ist auf die Stutzen-Ansatzbreite b begrenzt. Auch hier steigt die Höhe der Außenverrippung, gesehen in Richtung Rohrachse, zum Mittelbereich an bzw. fällt sie von diesem ab, wie Fig. 2a bzw. Fig. 3a deutlich zeigen. Ebenso steigen auch hier die Verstärkungsrippen bogenförmig aus der Rohraußenseite auf und laufen sie seitlich im wesentlichen tangential in die Rohraußenseite ein. Maximal beträgt der Bogenwinkel α, über den sich die radial um das Rohrteil verlaufenden Verstärkungsrippen erstrecken, etwa 180° und vorzugsweise etwa 160°. Zu den Endbereichen der Außenverrippung hin, in Richtung der Rohrachse gesehen, wohin die Höhe der Verstärkungsrippen abnimmt, verringert sich dieser Bogenwinkel α entsprechend.

## Patentansprüche

1. Kunststoff-Rohrteil mit einem Aufprallbereich durchgeleiteter Abwässer, insbesondere Bogen- und Abzweig-Formstück für Rohrsysteme in Abwasser-Hausinstallationen,
**gekennzeichnet** durch
eine partielle Außenverrippung (2,2',2"), im wesentlichen begrenzt auf den Aufprallbereich.

2. Kunststoff-Rohrteil, nämlich Bogen-Formstück, nach Anspruch 1,
dadurch **gekennzeichnet,** daß
die partielle Außenverrippung (2), im wesentlichen auf die Bogenaußenseite, begrenzt ist.

3. Kunststoff-Rohrteil, nämlich Abzweig-Formstück, nach Anspruch 1,
dadurch **gekennzeichnet,** daß
die partielle Außenverrippung (2',2"), im wesentlichen begrenzt auf die dem Abzweigstutzen (6,7) gegenüberliegende Rohraußenseite, begrenzt ist.

4. Kunststoff-Rohrteil nach einem der vorstehenden Ansprüche, dadurch **gekennzeichnet,**
daß die Höhe der Außenverrippung (2,2',2"), gesehen in Richtung der Rohrachse, zum Mittelbereich ansteigt bzw. abfällt.

5. Kunststoff-Rohrteil nach einem der vorstehenden Ansprüche,
dadurch **gekennzeichnet,** daß
die partielle Außenverrippung (2,2',2") in Form radial um das Rohrteil angeordneter Verstärkungsrippen, gestaltet ist.

6. Kunststoff-Rohrteil nach Anspruch 5,
dadurch **gekennzeichnet,**
daß die Verstärkungsrippen bogenförmig aus der Rohraußenseite aufsteigen und seitlich im wesentlichen tangential in die Rohraußenseite einlaufen.

7. Kunststoff-Rohrteil nach Anspruch 6,
dadurch **gekennzeichnet,**
daß die Verstärkungsrippen im Querschnitt trapezförmig sind und ihre Höhe etwa gleich der Rohrwandstärke und ihre Breite maximal 80% der Rohrwandstärke ist.

8. Kunststoff-Rohrteil nach einem der vorstehenden Ansprüche, dadurch **gekennzeichnet,**
daß als Kunststoffmaterial ein PE mit Bariumsulfat-Füller verwendet ist.

9. Rohrleitungssystem in Abwasser-Hausinstallationen unter Verwendung von Bogen- und/oder Abzweig-Formstücken (1,4,5) nach einem der vorhergehenden Ansprüche.

## Claims

1. A plastics pipe part including an impingement portion of conducted waste flow, more particularly a bend and branch fitting for domestic waste piping systems
characterized by
a partial outer ribbing (2, 2', 2") substantially limited to said impingement portion.

2. The plastics pipe part, namely a bend fitting, as set forth in claim 1,
characterized in that
said partial outer ribbing (2) is substantially limited to the outer side of the bend.

3. The plastics pipe part, namely a branch fitting, as set forth in claim 1,
characterized in that
said partial outer ribbing (2', 2") is substantially limited to the outer side of the pipe opposite the branch socket (6, 7).

4. The plastics pipe part as set forth in any of the preceding claims,
characterized in that
the height of said outer ribbing (2, 2', 2"), as viewed in the direction of the pipe centerline, rises to the middle portion and falls therefrom respectively.

5. The plastics pipe part as set forth in any of the preceding claims,
characterized in that
said partial outer ribbing (2, 2', 2") is configured in the form of reinforcement ribs arranged radially about the pipe part.

6. The plastics pipe part as set forth in claim 5,
characterized in that,
said reinforcement ribs rise curved from the outer side of said pipe and laterally run substantially tangentially into the outer side of said pipe.

7. The plastics pipe part as set forth in claim 6,
characterized in that,
said reinforcement ribs have a trapezoidal cross-section and their height roughly equals the pipe wall thickness and their width is maximally 80% of said pipe wall thickness.

8. The plastics pipe part as set forth in any of the preceding claims,
characterized in that
a PE including a barium sulphate filler is used as the plastics material.

9. A domestic waste piping system making use of bend and/or branch fittings (1, 4, 5) as set forth in any of the preceding claims.

## Revendications

1. Elément de tuyauterie en matière plastique comprenant une zone de choc pour les eaux usées transportées, en particulier coude ou bifurcation pour systèmes de tuyauterie domestiques d'eaux usées, caractérisé par des nervures extérieures (2, 2', 2") partielles, essentiellement limitées à la zone de choc.

2. Elément de tuyauterie en matière plastique, en particulier coude, selon la revendication 1, caractérisé en ce que les nervures extérieures (2) partielles sont limitées essentiellement à la face extérieure du tube.

3. Elément de tuyauterie en matière plastique, en particulier bifurcation, selon la revendication 1, caractérisé en ce que les nervures extérieures (2', 2") partielles sont limitées essentiellement à la face extérieure du tube en vis-à-vis de la bifurcation (6, 7).

4. Elément de tuyauterie en matière plastique selon une des revendications précédentes, caractérisé en ce que la hauteur des nervures extérieures (2, 2', 2") partielles, vu dans la direction de l'axe du tube, croît en direction de la partie médiane ou diminue à partir de celle-ci.

5. Elément de tuyauterie en matière plastique selon une des revendications précédentes, caractérisé en ce que les nervures extérieures (2, 2', 2") partielles sont conformées en nervures de rigidification disposées radialement autour de l'élément de tuyauterie.

6. Elément de tuyauterie en matière plastique selon la revendication 5, caractérisé en ce que les nervures extérieures s'étendent en arc de cercle sur la face extérieure du tube et se raccordent essentiellement tangentiellement à la face extérieure du tube sur les côtés.

7. Elément de tuyauterie en matière plastique selon la revendication 6, caractérisé en ce que les nervures extérieures en section transversale ont une forme trapézoïdale et présentent une hauteur sensiblement égale à l'épaisseur de paroi du tube et une largeur égale à 80 % maximum de ladite épaisseur de paroi du tube.

8. Elément de tuyauterie en matière plastique selon une des revendications précédentes, caractérisé en ce que l'on utilise comme matière plastique un polyéthylène avec une charge à base de sulfate de baryum.

9. Système de tuyauterie pour installation domestique d'eaux usées faisant usage de coudes et/ou de bifurcations moulés (1, 4, 9) selon une des revendications précédentes.
